# EUROPÄISCHE PATENTSCHRIFT

(11) **EP 2 696 089 B1**
(45) Veröffentlichungstag und Bekanntmachung des Hinweises auf die Patenterteilung: **22.02.2017**
(21) Anmeldenummer: 13003910.0
(22) Anmeldetag: 05.08.2013
(51) Int. Cl.: F16D 3/33, F16D 3/38

(54) **Doppelgelenk zur Verbindung zweier gegeneinander winkelverstellbarer Wellen, vorzugsweise für den Einsatz bei Lenkwellen von Fahrzeugen, insbesondere Kraftfahrzeugen**
Double joint for connecting two shafts that can be positioned at angles relative to each other, preferably for use in steering shafts of vehicles, especially motor vehicles
Double articulation pour relier deux arbres dont l'angle est réglable l'un par rapport à l'autre, de préférence pour une utilisation avec des arbres de direction de véhicules, notamment de véhicules automobiles

(30) Priorität: 08.08.2012 DE 202012007978 U
(43) Veröffentlichungstag der Anmeldung: 12.02.2014
(73) Patentinhaber: WILLI ELBE GELENKWELLEN GMBH & CO KG, 71732 Tamm (DE)
(72) Erfinder: Sedlmeier, Ralf, 74385 Pleidelsheim (DE); Magg, Werner, 73479 Ellwangen (DE)
(74) Vertreter: Jackisch-Kohl, Anna-Katharina

(56) Entgegenhaltungen:
- EP-A1- 0 469 396
- US-A- 2 986 022
- US-A- 2 991 634

## Beschreibung

Die Erfindung betrifft ein Doppelgelenk zur Verbindung zweier gegeneinander winkelverstellbarer Wellen, vorzugsweise für den Einsatz bei Lenkwellen von Fahrzeugen, insbesondere Kraftfahrzeugen, nach dem Oberbegriff des Anspruches 1.

Doppelgelenke wie zum Beispiel aus der EP 0 469 396 A1 bekannt, werden zur Verbindung von Antriebswellen mit winkelschiefen Zwischen- bzw. Abtriebswellen eingesetzt. Ein besonderes Anwendungsgebiet von Doppelgelenken sind Lenkwellen von Fahrzeugen, insbesondere von Kraftfahrzeugen. Die Doppelgelenke haben zwei Gelenkgabeln, in denen jeweils ein Gelenkkreuz schwenkbar gelagert ist. Die beiden Gelenkkreuze ihrerseits sind über eine Zentriereinheit miteinander verbunden, die aus einer Lagerkugel und einem Zentrierteil besteht. Der Zentrierteil sitzt in der Lagerkugel und kann relativ zu ihr verschoben und um seine Achse gedreht werden, je nach Teilwinkel zwischen den durch das Doppelgelenk miteinander verbundenen Wellen. Die Lagerkugel ihrerseits kann je nach Teilwinkel im Lagerring drehen. Auf den Zentrierteil wirkt ein Biegemoment, wenn am Lenkrad des Fahrzeuges gedreht wird. Die Höhe des auftretenden Biegemomentes hängt von der Einbaulage ab. Häufig kann die Einbaulage des Doppelgelenkes nicht so gewählt werden, dass das auf den Zentrierteil wirkende Biegemoment gering ist. Bei einer ungünstigen Einbaulage des Doppelgelenkes kommt es darum beim Drehmomentwechsel, zum Beispiel beim Links-Rechts-Drehen des Lenkrades, zu Geräuschen innerhalb des Doppelgelenkes. Dies ist auf das Spiel zwischen dem Zentrierteil, der Lagerkugel und dem Lagerring zurückzuführen. Auf die Lagerkugel wirkt eine Kraft senkrecht zum Zentrierteil, was zur Folge hat, dass bei einem Wechsel der Kraftrichtung die Lagerkugel schlagartig von der einen in die andere Lage gedrückt wird. Dadurch entstehen die unerwünschten Geräusche.

Der Erfindung liegt die Aufgabe zugrunde, das gattungsgemäße Doppelgelenk so auszubilden, dass die Geräuschentwicklung auch bei einer ungünstigen Einbaulage des Doppelgelenkes vermieden oder zumindest so weit gedämpft wird, dass sie nicht stört.

Diese Aufgabe wird beim gattungsgemäßen Doppelgelenk erfindungsgemäß mit den kennzeichnenden Merkmalen des Anspruches 1 gelöst.

Beim erfindungsgemäßen Doppelgelenk wirkt auf die Lagerkugel stets eine Kraft, die größer ist als die jeweils vom Zentrierteil auf die Lagerkugel ausgeübte Querkraft. Dadurch wird die Lagerkugel ständig gegen den Lagerring gedrückt. Auf diese Weise wird ein Klacken im Doppelgelenk vermieden, wenn ein Drehmomentwechsel stattfindet, beispielsweise bei einem Links-Rechts-Drehen des Lenkrades.

Um die Kraft zu erzeugen, wird vorteilhaft wenigstens ein federndes Druckstück eingesetzt. Mit ihm ist es möglich, die Lagerkugel zuverlässig gegen den Lagerring zu drücken.

Bei einer einfachen Ausführungsform ist das Druckstück vorteilhaft ringförmig ausgebildet. Dadurch ist es möglich, die Lagerkugel in jeder Lage zuverlässig in Richtung auf den Lagerring zu belasten.

Eine kostengünstige und dennoch zuverlässig wirkende Ausbildung ergibt sich, wenn das Druckstück durch einen Gummiring gebildet ist. Er ist ein kostengünstiges und dennoch wirksames Bauteil, mit dem in einfacher Weise die auf die Lagerkugel wirkende Kraft erzeugt werden kann.

Besonders vorteilhaft ist es, wenn das Druckstück über wenigstens ein Dämpfungselement gegen die Lagerkugel drückt. Der Einsatz des Dämpfungselementes trägt zur optimalen Geräuschdämpfung bei.

Das Dämpfungselement ist vorteilhaft als Ring ausgebildet, der ein kostengünstiges Bauteil ist und sich einfach in das Doppelgelenk einbauen lässt.

Eine gute Dämpfung ergibt sich, wenn das Dämpfungselement flächig an der Lagerkugel anliegt.

Die flächige Anlage kann in konstruktiv einfacher Weise dadurch erreicht werden, dass das Dämpfungselement im Anlagebereich der Lagerkugel eine umlaufende Fase aufweist.

Vorteilhaft sind das Druckstück und/oder das Dämpfungselement in einer Zentrierbuchse angeordnet.

Die Zentrierbuchse nimmt vorteilhaft auch den Lagerring für die Lagerkugel auf. Das Druckstück, das Dämpfungselement und der Lagerring können darum raumsparend innerhalb des Doppelgelenkes untergebracht werden.

Der Lagerring und das Dämpfungselement liegen vorteilhaft mit Abstand axial hintereinander in der Zentrierbuchse. Durch diesen Abstand ist sichergestellt, dass das Dämpfungselement nur an der Lagerkugel und nicht am Lagerring anliegt. Dadurch ist jederzeit eine zuverlässige Dämpfwirkung sichergestellt.

Die Zentrierbuchse ist bei einer vorteilhaften Ausführungsform innerhalb eines ringförmigen Mittelstückes untergebracht, an dem die beiden Gelenkkreuze des Doppelgelenkes schwenkbar gelagert sind.

Wenn der Andrückbereich der Lagerkugel am Lagerring und der Anlagebereich des Dämpfungselementes an der Lagerkugel auf unterschiedlichen Seiten der Radialmittelebene des Mittelstückes liegen, ergibt sich eine zuverlässige Anlage der Lagerkugel am Lagerring unter der vom Druckstück über das Dämpfungselement ausgeübten Andrückkraft.

Vorteilhaft sind der Zentrierteil und die Zentrierbuchse jeweils an einer Gelenkgabel des erfindungsgemäßen Doppelgelenkes vorgesehen.

Der Anmeldungsgegenstand ergibt sich nicht nur aus dem Gegenstand der einzelnen Ansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer Darstellung eine Lenkstange eines Kraftfahrzeuges mit einem erfindungsgemäßen Doppelgelenk,
- Fig. 2: in vergrößerter Darstellung und im Schnitt das erfindungsgemäße Doppelgelenk,
- Fig. 3: in vergrößerter Darstellung einen Teil einer Zentriereinheit des erfindungsgemäßen Doppelgelenkes.

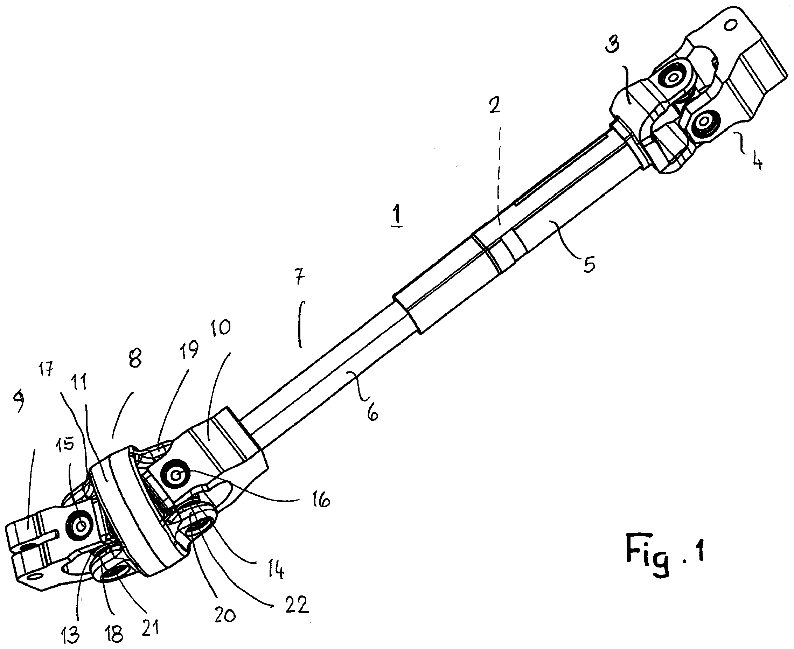

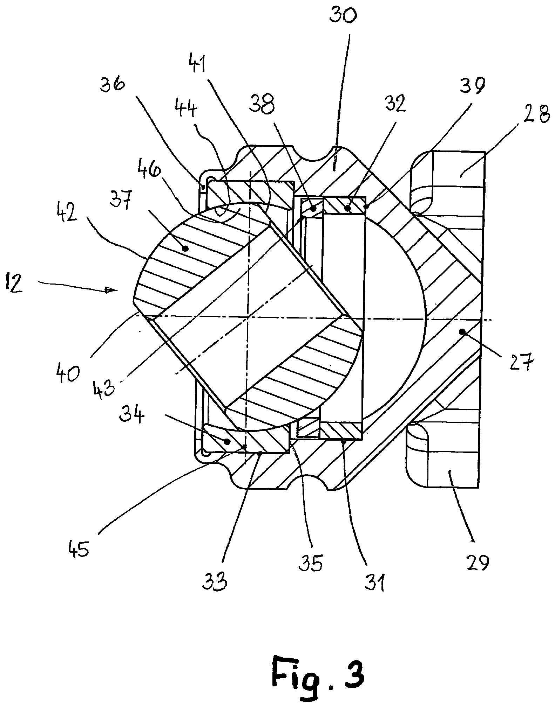

Fig. 1 zeigt einen Lenkstrang 1, der Teil einer Lenksäule ist, die zwischen dem Lenkrad und dem Lenkgetriebe eines Fahrzeuges, vorzugsweise eines Kraftfahrzeuges, angeordnet ist. Der Lenkstrang 1 hat eine Lenkstange 2, die an einem Ende mit einer Gelenkgabel 3 eines Kardangelenkes 4 versehen ist. Die Lenkstange 2 wird von einer Dichtung 5 umgeben. Der Lenkstrang 1 hat einen Schiebeteil 6 einer längenausgleichenden Kupplung 7. An dem vom Kardangelenk 4 abgewandten Ende des Schiebeteiles 6 befindet sich ein Doppelgelenk 8, das zwei Gelenkgabeln 9, 10 aufweist. Die Gelenkgabel 10 ist mit dem Schiebeteil 6 fest verbunden. Zwischen den beiden Gelenkgabeln befindet sich ein ringförmiges Mittelstück 11, das eine Zentriereinheit 12 umgibt (Fig. 3), über welche Gelenkkreuze 13 und 14 gelenkig miteinander verbunden sind. Die beiden Gelenkkreuze 13, 14 haben jeweils eine Schwenkachse 15, 16, die in den Gabeln der beiden Gelenkgabeln 9, 10 drehbar gelagert sind. Die beiden Schwenkachsen 15, 16 werden durch von den Gelenkkreuzen 13, 14 abstehende Zapfen gebildet.

Die Gelenkkreuze 13, 14 ihrerseits sind schwenkbar in Lageraugen 17 bis 20 gelagert, die vom Mittelstück 11 abstehen und in denen die Gelenkkreuze 13, 14 mit jeweils einer Schwenkachse 21, 22 gelagert sind. Sie werden durch quer von den Gelenkkreuzen abstehende Zapfen gebildet, die in den Lageraugen 17 bis 20 gelagert sind. Die Schwenkachsen 21, 22 liegen rechtwinklig zu den Schwenkachsen 15, 16.

Die Lageraugen 17 bis 20 sind vorteilhaft einstückig mit dem Mittelstück 11 ausgebildet. Die Lageraugen 17, 18 liegen beiderseits der Gelenkgabel 9 und die Lageraugen 19, 20 beiderseits der Gelenkgabel 10.

Da die konstruktive Ausbildung eines Doppelgelenkes grundsätzlich bekannt ist, ist es zuvor nur in seinen wesentlichen Eigenschaften beschrieben worden.

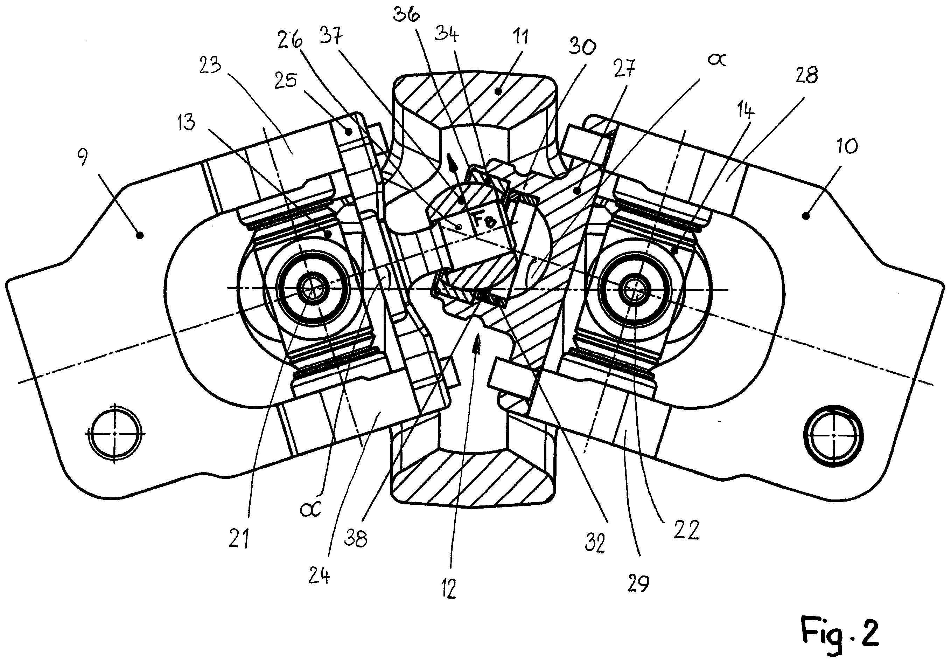

Mit dem Doppelgelenk 8 werden zwei winkelschiefe Wellen miteinander verbunden, im Ausführungsbeispiel die dargestellte Kardangelenkwelle mit einer (nicht dargestellten) weiteren Welle, die an die Gelenkgabel 9 angeschlossen ist. Aufgrund der Zentriereinheit 12 ist das Doppelgelenk 8 selbstzentrierend ausgebildet. Durch die Zentriereinheit 12 ist gewährleistet, dass die beiden Gelenkgabeln 9, 10 jeweils um denselben Teilwinkel α (Fig. 2) ausgelenkt werden. Dieser Teilwinkel liegt üblicherweise in einem Bereich zwischen etwa 20° und etwa 25°. Aufgrund der Zentriereinheit 12 werden die beiden Gelenkgabeln 9, 10 zwangweise um den gleichen Teilwinkel α geschwenkt. Das Doppelgelenk 8 ermöglicht größere Beugewinkel als bei Einsatz von zwei Einzelgelenken.

Die Gelenkgabel 9 hat die beiden Gabelschenkel 23, 24, die gegen das Mittelstück 11 gerichtet sind und auf deren Stirnseite ein Träger 25 befestigt, vorzugsweise vertaumelt ist. Vom etwa plattenförmigen Träger 25 steht mittig ein Zentrierbolzen 26 ab. Er ist zylindrisch ausgebildet und in einer Zentrierbuchse 27 aufgenommen, die mit der Gelenkgabel 10 verbunden ist. Die Zentrierbuchse 27 ist auf der Stirnseite der beiden Gabelschenkel 28, 29 der Gelenkgabel 10 befestigt, vorzugsweise vertaumelt. Die Zentrierbuchse 27 hat einen Lageransatz 30, dessen Innenwandung eine ringförmige Lagerfläche 31 (Fig. 3) für wenigstens ein Druckstück 32 und eine weitere ringförmige Lagerfläche 33 für einen Lagerring 34 aufweist. Im Ausführungsbeispiel hat die Lagerfläche 31 einen kleineren Durchmesser als die Lagerfläche 33. Der Lagerring 34 liegt mit einem Ende an einer radialen Schulterfläche 35 am Übergang zwischen den beiden Lagerflächen 31, 33 an. An der anderen Seite wird der Lagerring 34 von einem ringförmigen Anschlag 36 teilweise übergriffen. Der Anschlag 36 wird vorteilhaft durch eine Umbördelung des freien Randes der Zentrierbuchse 27 gebildet. Der Lagerring 34 nimmt eine Lagerkugel 37 auf, die auf dem Zentrierbolzen 26 sitzt. Er ist innerhalb der Lagerkugel 37 um seine Achse drehbar und in seiner Längsrichtung verschiebbar. Die Lagerkugel 37 ihrerseits ist relativ zum Lagerring 34 drehbar. Je nach dem Biegewinkel der Gelenkgabel 9, 10 führt der Zentrierbolzen 26 eine Relativbewegung zur Lagerkugel 37 aus. Die Lagerkugel 37 und der Zentrierbolzen 26 der Zentriereinheit 12 liegen in jeder Stellung der Gelenkgabeln 9, 10 etwa in halber Breite innerhalb des Mittelstückes 11.

Auf den Zentrierbolzen 26 wirkt infolge der quer zu seiner Achse auftretenden Kraft F_{B} ein Biegemoment, wenn das Lenkrad des Fahrzeuges gedreht wird. Die Größe des auftretenden Biegemomentes hängt von der Einbausituation ab. Häufig lässt sich der Lenkstrang 1 nicht so in das Fahrzeug einbauen, dass auf den Zentrierbolzen 26 nur ein minimales Biegemoment wirkt. Bei einer ungünstigen Einbaulage des Doppelgelenkes 8 kommt es bei einem Drehmomentwechsel (zum Beispiel Links-Rechts-Drehen des Lenkrades) zu unerwünschten Geräuschen im Doppelgelenk. Ein Grund für diese Geräusche ist u.a. das Spiel zwischen dem Zentrierbolzen 26, der Lagerkugel 37 und dem Lagerring 34. Die Lagerkugel 37 wird im Einsatz durch die Kraft F_{B} senkrecht zur Achse des Zentrierbolzens 36 belastet. Bei einem Wechsel der Kraftrichtung wird darum die Lagerkugel 37 schlagartig von der einen in die andere Lage gedrückt.

Um die auftretenden Geräusche, die sich durch ein Klacken bemerkbar machen, auszuschalten, ist die Zentriereinheit 12 mit dem wenigstens einen Druckstück 32 versehen, das auf die Lagerkugel 37 mit einer Kraft wirkt, die größer ist als die durch den Zentrierbolzen 26 auf die Lagerkugel 37 ausgeübte Kraftkomponente.

Das Druckstück 32 drückt ein Dämpfungselement 38 gegen die Lagerkugel 37. Das Dämpfungselement 38 ist ein Dämpfungsring, der an der einen Stirnseite des ringförmigen Druckstückes 32 anliegt. Das Druckstück 32 stützt sich mit seinem anderen Ende an einer radialen Schulterfläche 39 ab, die rechtwinklig an die Lagerfläche 31 anschließt.

Das Druckstück 32 ist vorteilhaft ein Gummiring, der eine definierte Shore-Härte aufweist. Das Druckstück 32 ist in der Einbaulage gemäß Fig. 3 vorteilhaft geringfügig axial vorgespannt, so dass er stets einen Druck auf das Dämpfungselement 38 und damit auf die Lagerkugel 37 ausübt. Das Druckstück 32 kann auch aus einem anderen geeigneten Material bestehen, das entsprechende Eigenschaften wie der Gummiring hat. Das Druckstück sollte je nach den Einsatzbedingungen des Doppelgelenkes aus thermisch beständigem Material bestehen, das je nach Einsatzbedingungen auch beständig gegen Fette, Öle und dergleichen sein sollte.

Das Dämpfungselement 38 besteht aus einem geeigneten dämpfenden Material, wie dem Hochleistungskunststoff "PEEK", einem Polyetheretherketon, und hat geringfügig kleineren Außendurchmesser als das ringförmige Druckstück 32. Dadurch ist gewährleistet, dass das Dämpfungselement nicht an der Lagerfläche 31 anliegt, wodurch die Dämpfungswirkung gegebenenfalls beeinträchtigt werden könnte.

Die Lagerkugel 37 hat zwei parallel zueinander verlaufende Abflachungen 40, 41, zwischen denen sich eine kalottenförmige Oberfläche 42 erstreckt. An ihr liegt das Dämpfungselement 38 an. Um einen guten Kontakt zwischen der kalottenförmigen Oberfläche 42 und dem Dämpfungselement 38 zu erreichen, ist das Dämpfungselement 38 mit einer umlaufenden Fase 43 versehen. Mit ihr liegt das Dämpfungselement 38 unter der Kraft des Druckstückes 32 flächig an der Lagerkugel 37 an.

Das ringförmige Dämpfungselement 38 hat viereckigen Querschnitt, wobei an der der Lagerkugel 37 zugewandten Stirnseite die Fase 43 zwischen dieser Stirnseite und der Innenseite des Dämpfungselementes 38 vorgesehen ist. In der Einbaulage ragt das Dämpfungselement radial nach innen über das ringförmige Druckstück 32. Außerdem hat das Dämpfungselement 38 Abstand vom Lagerring 34, der radial nach innen über die Schulterfläche 35 ragt und mit seiner kalottenförmigen Innenseite 44 an der kalottenförmigen Oberfläche 42 der Lagerkugel 37 anliegt. Das Dämpfungselement 38 hat Abstand vom Lagerring 34, so dass sichergestellt ist, dass das Dämpfungselement 38 stets an der Lagerkugel 37 anliegt.

Da das Dämpfungselement 38 zwischen dem Lagerring 34 und dem Druckstück 32 angeordnet ist, wird die Lagerkugel 37 stets gegen den in Fig. 3 linken Teil des Lagerringes 34 gedrückt. Dadurch wird zuverlässig eine Geräuschentwicklung, insbesondere ein Klacken, im Doppelgelenk vermieden.

Der Andrückbereich 46 am Lagerring 34 und das Dämpfungselement 38 liegen auf einander gegenüberliegenden Seiten der Radialmittelebene 45 des Lagerrings 34.

Je nach Stellung der Lagerkugel 37 liegt das Dämpfungselement 38 über unterschiedliche Umfangslängen an der kalottenförmigen Oberfläche 42 der Lagerkugel 37 an. Dadurch ist unabhängig von der Größe des Teilwinkels α sichergestellt, dass Geräusche beim Drehmomentwechsel nicht auftreten.

Das Druckstück 32 und das Dämpfungselement 38 nehmen nur wenig Bauraum in Anspruch, da sie zusammen mit dem Lagerring 34 und der Lagerkugel 37 in der Zentrierbuchse 27 untergebracht sind. Die Gesamtbreite von Druckstück 32 und Dämpfungselement 38 kann gleich oder auch geringer als die Breite des Lagerrings 34 sein, so dass für diese Bauteile wenig Einbauraum notwendig ist. Sie können daher auch in kleineren Doppelgelenken untergebracht werden. Die Gesamtbreite kann selbstverständlich auch größer sein als die Breite des Lagerrings 34.

## Patentansprüche

1. Doppelgelenk zur Verbindung zweier gegeneinander winkelverstellbarer Wellen, vorzugsweise für den Einsatz bei Lenkwellen von Fahrzeugen, insbesondere Kraftfahrzeugen, mit zwei Gelenkgabeln (9, 10), an die jeweils ein Gelenkkreuz (13, 14) angeschlossen ist, mit einer Zentriereinheit (12), über welche die Gelenkkreuze (13, 14) miteinander gekuppelt sind und die einen Zentrierteil (26) aufweist, der in einer Lagerkugel (37) gelagert ist, die in einem Lagerring (34) sitzt und
auf die eine Kraft wirkt, die größer ist als die jeweilige vom Zentrierteil (26) auf die Lagerkugel (37) ausgeübte Querkraft (F_{B}) und durch die die Lagerkugel (37) gegen den Lagerring (34) gedrückt, wobei die auf die Lagerkugel (37) wirkende Kraft durch wenigstens ein federndes Druckstück (32) erzeugt wird,
**dadurch gekennzeichnet, dass** das Druckstück (32) ringförmig ausgebildet ist und wenigstens ein Dämpfungselement (38) gegen die Lagerkugel (37) drückt, das als Ring ausgebildet ist und flächig an der Lagerkugel (37) anliegt.

2. Doppelgelenk nach Anspruch 1,
**dadurch gekennzeichnet, dass** das Druckstück (32) ein Gummiring ist.

3. Doppelgelenk nach Anspruch 1 oder 2,
**dadurch gekennzeichnet, dass** das Dämpfungselement (38) im Anlagebereich der Lagerkugel (37) eine umlaufende Fase (43) aufweist.

4. Doppelgelenk nach einem der Ansprüche 1 bis 3,
**dadurch gekennzeichnet, dass** das Druckstück (32) und/oder das Dämpfungselement (38) in einer Zentrierbuchse (27) angeordnet sind.

5. Doppelgelenk nach einem der Ansprüche 1 bis 4,
**dadurch gekennzeichnet, dass** die Zentrierbuchse (27) den Lagerring (34) für die Lagerkugel (37) aufnimmt.

6. Doppelgelenk nach einem der Ansprüche 1 bis 5,
**dadurch gekennzeichnet, dass** der Lagerring (34) und das Dämpfungselement (38) mit Abstand axial hintereinander in der Zentrierbuchse (27) angeordnet sind.

7. Doppelgelenk nach einem der Ansprüche 1 bis 6,
**dadurch gekennzeichnet, dass** die Zentrierbuchse (27) in ein ringförmiges Mittelstück (11) ragt, an dem die Gelenkkreuze (13, 14) schwenkbar gelagert sind.

8. Doppelgelenk nach einem der Ansprüche 1 bis 7,
**dadurch gekennzeichnet, dass** der Andrückbereich (46) der Lagerkugel (37) am Lagerring (34) und der Anlagebereich des Dämpfungselementes (38) an der Lagerkugel (37) auf unterschiedlichen Seiten der Radialmittelebene (45) des Mittelstückes (11) liegen.

9. Doppelgelenk nach einem der Ansprüche 1 bis 8,
**dadurch gekennzeichnet, dass** der Zentrierteil (26) an der einen Gelenkgabel (9) und die Zentrierbuchse (27) an der anderen Gelenkgabel (10) vorgesehen sind.

## Claims

1. A double joint for connecting two shafts that can be positioned at angles relative to each other, preferably for use in steering shafts of vehicles, in especially motor vehicles, said joint having two joint forks (9, 10), to each of which a spider (13, 14) is attached, a centring unit (12), via which the spiders (13, 14) are coupled to each other and which has a centring part (26) that is mounted in a bearing ball (37) that sits in a bearing ring (34), and
on which a force acts, which is greater than the respective transverse force (F_{B}) exerted on the bearing ball (37) by the centring part (26) and by means of which the bearing ball (37) is pressed against the bearing ring (34), the force acting on the bearing ball (37) being generated by at least one resilient pressure piece (32),
**characterised in that**
the pressure piece (32) is annular and presses at least one damping element (38) against the bearing ball (37), said damping element being in the form of a ring and bearing flat against the bearing ball (37).

2. The double joint according to Claim 1,
**characterised in that**
the pressure piece (32) is a rubber ring.

3. The double joint according to Claim 1 or 2,
**characterised in that**
the damping element (38) has a circumferential chamfer (43) in the contact region of the bearing ball (37).

4. The double joint according to any one of Claims 1 to 3,
**characterised in that**
the pressure piece (32) and/or the damping element (38) are arranged in a centring bushing (27).

5. The double joint according to any one of Claims 1 to 4,
**characterised in that**
the centring bushing (27) receives the bearing ring (34) for the bearing ball (37).

6. The double joint according to any one of Claims 1 to 5,
**characterised in that**
the bearing ring (34) and the damping element (38) are arranged at an axial distance one behind the other in the centring bushing (27).

7. The double joint according to any one of Claims 1 to 6,
**characterised in that**
the centring bushing (27) projects into an annular centre piece (11), on which the spiders (13, 14) are pivotably mounted.

8. The double joint according to any one of Claims 1 to 7,
**characterised in that**
the pressure region (46) of the bearing ball (37) on
the bearing ring (34) and the contact region of the damping element (38) on the bearing ball (37) lie on different sides of the radial centre plane (45) of the centre piece (11).

9. The double joint according to any one of Claims 1 to 8,
**characterised in that**
the centring part (26) is provided on one joint fork (9) and the centring bushing (27) is provided on the other joint fork (10).

## Revendications

1. Double articulation pour relier deux arbres dont l'angle est réglable l'un par rapport à l'autre, de préférence pour une utilisation avec des arbres de direction de véhicules, notamment de véhicules automobiles, comportant deux fourches articulées (9, 10) auxquelles est reliée respectivement une croix articulée (13, 14), une unité de centrage (12) par l'intermédiaire de laquelle les croix articulées (13, 14) sont reliées l'une à l'autre et qui présente une pièce de centrage (26) qui s'appuie dans une bille de palier (37) qui est assise dans un anneau de palier (34) et sur laquelle agit une force qui est supérieure à la force transversale (F_{B}) exercée par la pièce de centrage (26) sur la bille de palier (37) et par laquelle la bille de palier (37) est comprimée contre l'anneau de palier (34), la force agissant sur la bille de palier (37) étant générée par au moins une pièce de compression élastique (32),
**caractérisée en ce que** la pièce de compression (32) a une conformation annulaire et qu'au moins un élément d'amortissement (38) qui est réalisé en forme d'anneau et repose superficiellement sur la bille de palier (37) appuie contre la bille de palier (37) .

2. Double articulation selon la revendication 1,
**caractérisée en ce que** la pièce de compression (32) est un anneau en caoutchouc.

3. Double articulation selon la revendication 1 ou 2,
**caractérisée en ce que** l'élément d'amortissement (38) présente un chanfrein périphérique (43) dans la zone de contact de la bille de palier (37).

4. Double articulation selon une des revendications 1 à 3,
**caractérisée en ce que** la pièce de compression (32) et/ou l'élément d'amortissement (38) sont disposés dans une douille de centrage (27) .

5. Double articulation selon une des revendications 1 à 4,
**caractérisée en ce que** la douille de centrage (27) reçoit l'anneau de palier (34) pour la bille de palier (37) .

6. Double articulation selon une des revendications 1 à 5,
**caractérisée en ce que** l'anneau de palier (34) et l'élément d'amortissement (38) sont disposés espacés axialement l'un derrière l'autre dans la douille de centrage (27).

7. Double articulation selon une des revendications 1 à 6,
**caractérisée en ce que** la douille de centrage (27) rentre dans une pièce centrale de forme annulaire (11) à laquelle les croix articulées (13, 14) s'appuient de manière pivotable.

8. Double articulation selon une des revendications 1 à 7,
**caractérisée en ce que** la zone de compression (46) de la bille de palier (37) au niveau de la bague de palier (34) et la zone d'appui de l'élément d'amortissement (38) au niveau de la bille de palier (37) se trouvent sur des faces différentes du plan médian radial (45) de la pièce centrale (11).

9. Double articulation selon une des revendications 1 à 8,
**caractérisée en ce que** la pièce de centrage (26) est prévue sur une des fourches articulées (9) et la douille de centrage (27) sur l'autre fourche articulée (10) .
